Europäisches Patentamt

European Patent Office

Office européen des brevets

(19)

(11) Numéro de publication : **0 385 816 B1**

(12) **FASCICULE DE BREVET EUROPEEN**

(45) Date de publication du fascicule du brevet :
**22.01.92 Bulletin 92/04**

(51) Int. Cl.$^5$ : **F15B 1/053**

(21) Numéro de dépôt : **90400141.9**

(22) Date de dépôt : **18.01.90**

(54) **Accumulateur de fluide sous pression.**

(30) Priorité : **27.02.89 FR 8902479**

(43) Date de publication de la demande :
**05.09.90 Bulletin 90/36**

(45) Mention de la délivrance du brevet :
**22.01.92 Bulletin 92/04**

(84) Etats contractants désignés :
**DE ES FR GB IT**

(56) Documents cités :
**DE-A- 3 707 803**
**US-A- 2 986 158**

(73) Titulaire : **BENDIX EUROPE Services Techniques S.A.**
**126 rue de Stalingrad**
**F-93700 Drancy (FR)**

(72) Inventeur : **Kervagoret, Gilbert, Bendix Europe Serv. Techniques, 126 Rue de Stalingrad**
**F-93700 Drancy (FR)**

(74) Mandataire : **Lejet, Christian et al**
**Bendix Europe Service Techniques Service Brevets 126 rue de Stalingrad**
**F-93700 Drancy (FR)**

Jouve, 18, rue Saint-Denis, 75001 PARIS

## Description

La présente invention a pour objet un accumulateur de fluide sous pression de type à piston. Les accumulateurs de fluide sous pression de type à piston sont bien connus (US-A-2986158) et couramment utilisés dans la technologie de l'hydraulique pour les nombreux avantages qu'ils présentent. En effet, tout en constituant une source de pression auxiliaire, ils permettent d'absorber des pulsations de pression, de compenser les fuites d'un circuit hydraulique, d'amortir les chocs, etc... C'est à ce titre qu'on les rencontre dans les circuits hydrauliques des véhicules automobiles, par exemple dans les systèmes de freinage avec antiblocage des roues, les systèmes de direction assistée ou les systèmes de suspension adaptative.

Dans différentes installations, et dans certaines conditions de fonctionnement, les accumulateurs de pression peuvent se trouver intercalés entre un émetteur de pression et un récepteur de pression. Si le récepteur de pression est constitué par le côté aspiration d'une pompe élévatrice de pression, l'émetteur de pression peut alors se trouver en dépression, ce qui peut nuire à son bon fonctionnement.

La présente invention a donc pour but de prévoir un accumulateur de pression qui évite les inconvénients mentionnés ci-dessus.

Le document DE-A-3707803 décrit un accumulateur à membrane pouvant être connecté à deux circuits hydrauliques. De façon usuelle, la membrane porte un bouchon venant fermer la connexion aux circuits hydrauliques lorsque l'accumulateur est hors service, de manière à éviter le passage du gaz contenu dans la poche à gaz vers le liquide de frein, passage inhérent à la porosité de la membrane.

L'invention concerne donc un accumulateur de pression comprenant dans une enceinte un élément constitué par un piston coulissant de façon étanche dans un alésage, et rappelé dans sa position de repos par un ressort, le piston étant mobile entre une position de repos et une position active, et définissant dans l'enceinte une chambre de travail de volume variable.

Selon l'invention la chambre de travail est reliée à une canalisation d'alimentation en pression et à une canalisation de restitution de pression et la communication entre la canalisation d'alimentation en pression et la canalisation de restitution de pression est interrompue lorsque le piston est en position de repos.

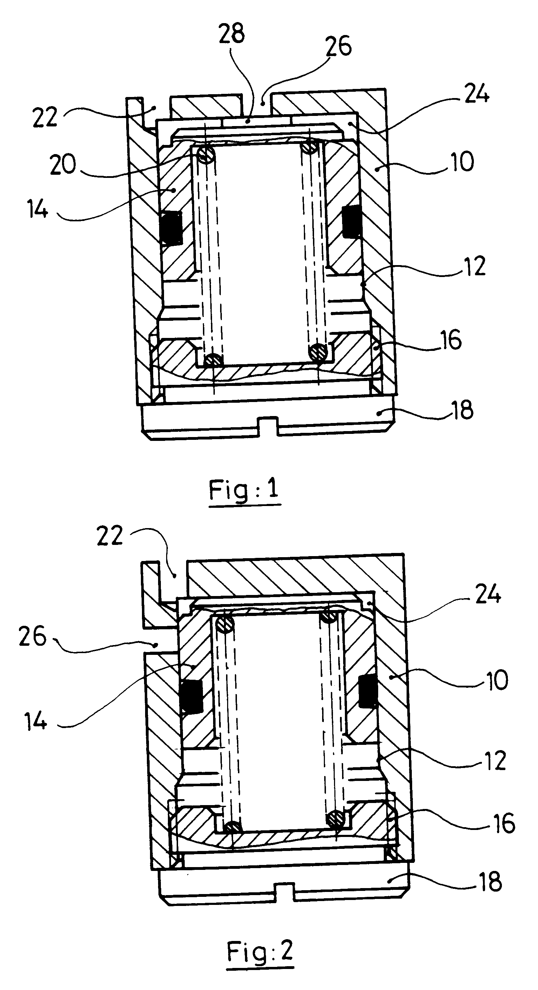

L'invention sera mieux comprise à la lecture de la description qui va suivre d'un mode de réalisation donné à titre d'exemple en référence aux Figures 1 et 2 représentant schématiquement en coupe un accumulateur de pression réalisé conformément à la présente invention selon deux modes différents.

On a représenté sur les Figures un accumulateur de pression du type à ressort, constitué d'un corps 10 dans lequel un alésage 12 a été ménagé. Dans cet alésage 12 coulisse de façon étanche un piston creux 14. L'alésage 12 présente à l'une de ses extrémités une partie filetée 16 sur laquelle vient se visser un bouchon 18. Entre le bouchon 18 et le piston 14 est disposé un ressort 20. Dans le corps 10 est pratiquée une ouverture 22 débouchant dans l'alésage 12 et susceptible d'être reliée, par une canalisation d'alimentation et de restitution de pression non représentée, à un circuit hydraulique également non représenté, comprenant des émetteurs et des récepteurs de pression.

De façon classique, les accumulateurs connus sont pourvus de cette seule ouverture, le fluide sous pression est introduit dans l'accumulateur, et plus précisément dans la chambre de travail 24 définie entre le corps 10 et le piston 14, par l'ouverture 22, causant ainsi le mouvement du piston 14 à l'encontre du ressort 20, puis déchargé de l'accumulateur sous l'action du ressort 20 agissant sur le piston 14, par cette ouverture 22. On conçoit alors que, si la décharge de l'accumulateur est effectuée par le côté aspiration d'une pompe, lorsque l'accumulateur sera complètement déchargé, la pompe pourra donc continuer son aspiration dans d'autres dispositifs du circuit hydraulique, ce qui peut devenir préjudiciable à leur bon fonctionnement. Pour éviter ce problème, la solution classique était de disposer dans le circuit des clapets anti-retour, composants coûteux, délicats et dont le tarage ne reste pas constant.

On réalise dans le corps 10 une deuxième ouverture 26 débouchant dans l'alésage 12. Cette ouverture 26 est destinée à être reliée, par une canalisation de restitution de pression, non représentée, à un récepteur de pression non représenté, tandis que l'ouverture 22 ne sera plus reliée que, par une canalisation d'alimentation de pression, non représentée, à un émetteur de pression non représenté. Les rôles des ouvertures 22 et 26 et des canalisations qui y sont reliées étant ainsi différenciés, il est alors facile d'intervenir préférentiellement sur chacune d'entre elles.

Sur la Figure 1, on a formé sur la tête du piston 14 dans la chambre de travail 24 une extension cylindrique 28 autour de l'axe du piston, et par conséquent en regard de l'ouverture 26 qui se trouve au voisinage de l'axe de l'alésage 12. De cette manière, lorsque l'accumulateur est déchargé et que le piston 14 occupe sa position de repos représentée sur la Figure, cette extension cylindrique joue le rôle d'un obturateur entre la chambre de travail 24 et l'ouverture 26. Si le récepteur de pression situé sur la canalisation de restitution de pression reliée à l'ouverture 26 est constitué par le côté aspiration d'une pompe, cette dernière ne pourra alors pas mettre la chambre 26 en dépression après le retour du piston 14 dans sa position de repos.

Il a été vérifié que le contact métal-métal entre l'extension cylindrique 28 et le fond de l'alésage 12 était suffisant pour procurer l'étanchéité requise. Si on désire parfaire cette étanchéité, il est bien entendu possible de munir l'extension 28 ou le fond de l'alésage 12 d'un joint souple annulaire, ou même de réaliser l'extension 28 elle-même en un matériau caoutchouteux qui sera collée sur la tête du piston 14.

Sur la Figure 2, l'ouverture 26 est formée dans la paroi latérale du corps 10, le piston constituant alors lui-même obturateur. Le contact metal-metal entre l'alésage 12 et le piston 14 est alors tout à fait suffisant pour assurer l'étanchéité requise.

## Revendications

1. Accumulateur de pression comprenant dans une enceinte un élément constitué par un piston (14) coulissant de façon étanche dans un alésage (12), et rappelé dans sa position de repos par un ressort (20), le dit piston (14) étant mobile entre une position de repos et une position active, et définissant dans l'enceinte une chambre de travail de volume variable (24), caractérisé en ce que la chambre de travail (24) est reliée à une canalisation d'alimentation en pression (22) et à une canalisation de restitution de pression (26), et que la communication entre la canalisation d'alimentation en pression (22) et la canalisation de restitution de pression (26) est interrompue lorsque ledit piston (14) est en position de repos.

2. Accumulateur selon la revendication 1, caractérisé en ce que la communication entre la chambre de travail (24) et la canalisation de restitution de pression (26) est interrompue par ledit piston (14) lorsque celui-ci occupe sa position de repos.

3. Accumulateur selon la revendication 2, caractérisé en ce que ladite communication est interrompue par un obturateur (28) formé sur la tête du piston.

4. Accumulateur selon la revendication 3, caractérisé en ce que l'obturateur (28) est constitué d'une extension cylindrique de la tête du piston (14).

## Patentansprüche

1. Druckspeicher, der in einem Behälter ein Element aufweist, das von einem Kolben (14) gebildet wird, der in einer Bohrung (12) auf dichte Weise verschiebbar ist und von einer Feder (20) in seine Ruheposition zurückgestellt wird, wobei der Kolben (14) zwischen einer Ruheposition und einer Arbeitsposition beweglich ist und im Behälter eine Arbeitskammer mit veränderlichem Volumen (24) definiert, dadurch gekennzeichnet, daß die Arbeitskammer (24) mit einer Druckversorgungsleitung (22) und mit einer Druckwiederherstellungsleitung (26) verbunden ist und daß die Verbindung zwischen der Druckversorgungsleitung (22) und der Druckwiderherstellungsleitung (26) unterbrochen wird, wenn sich der Kolben in der Ruheposition befindet.

2. Speicher gemäß Anspruch 1, dadurch gekennzeichnet, daß die Verbindung zwischen der Arbeitskammer (24) und der Druckwiederherstellungsleitung (26) vom Kolben (14) unterbrochen wird, wenn dieser seine Ruheposition einnimmt.

3. Speicher gemäß Anspruch 2, dadurch gekennzeichnet, daß die Verbindung durch eine auf dem Kopf des Kolbens ausgebildete Verschlußdichtung (28) unterbrochen wird.

4. Speicher gemäß Anspruch 3, dadurch gekennzeichnet, daß die Verschlußdichtung (28) von einer zylindrischen Erweiterung des Kopfes des Kolbens (14) gebildet wird.

## Claims

1. Pressure accumulator comprising, in an enclosure, an element consisting of a piston (14) sliding in leaktight manner in a bore (12), and returned to its neutral position by a spring (20), the said piston (14) being movable between a neutral position and an active position, and defining, in the enclosure, a work chamber of variable volume (24), characterized in that the work chamber (24) is connected to a pressure supply line (22) and to a pressure return line (26), and in that the communication between the pressure supply line (22) and the pressure return line (26) is broken when the said piston (14) is in the neutral position.

2. Accumulator according to Claim 1, characterized in that the communication between the work chamber (24) and the pressure return line (26) is broken by the said piston (14) when the latter occupies its neutral position.

3. Accumulator according to Claim 2, characterized in that the said communication is broken by a seal (28) formed on the head of the piston.

4. Accumulator according to Claim 3, characterized in that the seal (28) consists of a cylindrical extension of the head of the piston (14).

Fig : 1

Fig : 2